# FASCICULE DE BREVET EUROPEEN

(11) **EP 0 780 316 B1**
(45) Date de publication et mention de la délivrance du brevet: **07.07.1999**
(21) Numéro de dépôt: 96402757.7
(22) Date de dépôt: 17.12.1996
(51) Int. Cl.: B65D 47/12, B65D 47/18

(54) **Récipient manipulable en matière plastique**
Manipulierbarer Behälter aus Kunststoff
Handleable plastic container

(30) Priorité: 22.12.1995 FR 9515419; 25.06.1996 FR 9607848
(43) Date de publication de la demande: 25.06.1997
(73) Titulaire: VIRBAC S.A., F-06516 Carros Cedex (FR)
(72) Inventeur: Derrieu, Guy, 06800 Cagnes-sur-Mer (FR); Gugi, Philippe, 06000 Nice (FR)
(74) Mandataire: Doireau, Marc

(56) Documents cités:
- EP-A- 0 181 271
- DE-A- 2 933 111
- DE-U- 8 510 139
- US-A- 4 319 701
- US-A- 4 844 272

## Description

La présente invention concerne un récipient manipulable en matière plastique.

Il est connu du document FR-A-2 045 875 publié en 1971, un récipient en matière plastique qui, avant utilisation, est fermé hermétiquement au moyen d'un bouchon. Concrètement, le bouchon de fermeture comporte une jupe qui est solidaire du col du récipient par une collerette mince. Le bouchon de fermeture est séparé du récipient soit par rotation soit par enfoncement pour provoquer la rupture de la collerette. Ensuite, un bouchon distributeur est vissé sur un filetage prévu autour du col du récipient.

Cependant, un tel récipient à bouchon de fermeture jetable une fois que ce dernier a été séparé du récipient, n'est pas d'un usage pratique pour sa première utilisation, car il oblige l'utilisateur à rapporter un bouchon distributeur par vissage, ce qui peut occasionner une perte d'étanchéité par suite d'une mauvaise opération de vissage et entraîner une pollution du produit contenu dans le récipient.

Il est également connu du document DE-U-85 10 139 un récipient manipulable en matière plastique, comprenant un capuchon amovible de fermeture d'un orifice du récipient et des moyens de liaison entre le capuchon et le corps du récipient qui sont destinés à être rompus par rotation pour la première utilisation du récipient, un système de délivrance d'un produit contenu dans le récipient, ce système étant monté autour de l'orifice du récipient, solidaire de ce dernier et coiffé par le capuchon qui comprend au moins deux parties axialement alignées et reliées l'une à l'autre par lesdits moyens de liaison constitués par une zone de fragilisation qui sépare le capuchon en deux parties dont l'une reste en contact avec le corps du récipient après rupture de la zone de fragilisation.

Le but de l'invention est de perfectionner un récipient du type de celui décrit dans le document précité, en particulier pour conserver stérile le produit contenu dans le récipient, et qui est caractérisé en ce que la partie du capuchon qui reste en contact avec le corps du récipient est rendue solidaire du corps par des moyens de fixation étanches et hermétiques.

Selon une caractéristique: préferentielle, de l'invention, le capuchon et le système de délivrance comprennent des moyens de formes complémentaires pour pouvoir s'emboîter l'un dans l'autre de manière amovible et étanche après la première utilisation du récipient.

Dans un exemple de réalisation de l'invention, la première partie du capuchon est constituée par une paroi de fond bordée par une jupe, alors que la seconde partie du capuchon est constituée par une embase cylindrique de plus grand diamètre que celui de la jupe et qui est raccordée à celle-ci par la zone de fragilisation précitée qui est de forme annulaire.

Avantageusement, l'embase du capuchon est fixée de manière étanche et hermétique sur le corps du récipient par collage ou par scellage.

A titre préférentiel, le système de délivrance est une canule qui comprend un élément tubulaire en communication avec l'orifice du récipient, et les moyens de formes complémentaires pour permettre l'emboîtement du capuchon et du système de délivrance sont constitués par la partie d'extrémité libre de l'élément tubulaire du système de délivrance, et par un bossage central prévu sur la face interne de la paroi de fond du capuchon, ce bossage étant percé d'un orifice borgne dont le diamètre est à peine supérieur à celui de l'extrémité libre de l'élément tubulaire du système de délivrance pour recevoir par emboîtement et de façon étanche la partie d'extrémité libre de l'élément tubulaire.

Avantageusement, la paroi interne de l'orifice borgne du bossage du capuchon comporte une nervure circulaire en saillie formant un renflement pour parfaire l'assemblage et l'étanchéité entre le capuchon et le système de délivrance.

Selon un second mode de réalisation de l'invention, on apporte un perfectionnement au premier mode de réalisation, notamment au niveau du capuchon pour permettre une meilleure utilisation du système de délivrance du produit contenu dans le récipient.

Selon ce perfectionnement, le capuchon comporte une seconde zone de fragilisation destinée à être rompue pour ne découvrir uniquement que la partie d'extrémité libre du système de délivrance.

Selon ce second mode de réalisation de l'invention, le capuchon comprend trois parties qui sont axialement alignées :
- une partie de fond qui comprend une paroi de fond bordée par une première jupe,
- une partie centrale ou corps du capuchon qui comprend une seconde jupe reliée à la première jupe par la seconde zone de fragilisation, et
- une embase annulaire rendue solidaire du corps du récipient par des moyens de fixation étanches et raccordée à la seconde jupe par lesdits premiers moyens de liaison formés par la première zone de fragilisation.

Avantageusement, la partie centrale du capuchon forme un embout atraumatique.

Ainsi, lorsque le système de délivrance est constitué par une canule, il est possible avec le perfectionnement selon l'invention lors de la première utilisation du récipient :
- de rompre la première zone de fragilisation prévue entre le capuchon et le corps du récipient pour découvrir la canule sur sensiblement toute sa hauteur, ou
- de rompre seulement la seconde zone de fragilisation pour ne découvrir que la partie d'extrémité libre de la canule, la première zone de fragilisation entre le capuchon et le récipient pouvant être rompue par la suite.

D'une manière avantageuse, la première jupe du capuchon est munie de moyens de préhension, tels que des ailettes, pour favoriser la rupture par rotation de la seconde zone de fragilisation du capuchon.

D'une manière générale, le capuchon peut être également fabriqué en matière plastique, cette matière étant avantageusement la même que celle utilisée pour fabriquer le récipient, comme par exemple une matière thermoplastique macromoléculaire à base de polymères ou copolymères insolubles ou biodégradables, en particulier du polyéthylène à basse densité ou du polyéthylène linéaire à basse densité.

Selon un avantage de l'invention, le capuchon permet de retenir, après la première utilisation du récipient, le produit encore contenu dans le récipient grâce au bossage prévu sur la face interne de sa paroi de fond, et permet d'obturer de façon étanche l'élément tubulaire du système de délivrance et sans le détériorer.

Selon un autre avantage de l'invention, le récipient muni de son capuchon étanche scellé ou collé sur le corps du récipient, permet de rendre l'ensemble inviolable et de maintenir à la fois le système de délivrance et le produit isolés des éléments ou paramètres extérieurs, en particulier de conserver un produit stérile si, au préalable, le récipient muni de son capuchon a été stérilisé et l'opération de remplissage du récipient a été effectuée en milieu stérile, ou si le récipient muni de son capuchon et contenant le produit a été stérilisé.

Selon encore un autre avantage de l'invention, le capuchon n'est pas jetable et peut être replacé sur le système de délivrance après ouverture et première utilisation du récipient, ce qui permet de protéger le contenu du récipient et de pouvoir jeter le récipient en évitant au produit de se répandre dans l'environnement.

Un récipient conforme à l'invention peut avoir de nombreuses applications industrielles. En effet, ce récipient peut constituer une seringue, un tube ou flacon en matière plastique, qui permet le stockage, la conservation et la distribution de préparations stériles ou non, médicales, paramédicales, alimentaires, insecticides ou cosmétiques, par exemple.

En particulier, le récipient peut constituer une seringue contenant des préparations intra-mammaires pour animaux, un flacon contenant des produits ophtalmologiques mono-dose ou multi-doses, ou un tube comprenant des produits anti-parasitaires mono-dose ou multi-doses, par exemple.

D'autres avantages, caractéristiques et détails de l'invention ressortiront de la description explicative qui va suivre, faite en référence aux dessins annexés donnés uniquement à titre d'exemple et dans lesquels :
- la figure 1 est une vue en coupe axiale d'un récipient selon un premier mode de réalisation de l'invention,
- la figure 2 représente le capuchon du récipient illustré sur la figure 1 avec une demi-vue en extérieur et une demi-vue en coupe axiale,
- la figure 3 est une vue de dessus du capuchon illustré sur la figure 2,
- la figure 4 est une vue en coupe axiale du capuchon, selon une variante de celui illustré sur la figure 2,
- la figure 5 est une vue de dessus du capuchon illustré sur la figure 4,
- la figure 6 est une vue en coupe axiale du capuchon selon une autre variante de celui illustré sur la figure 2,
- la figure 7 est une vue de dessus du capuchon illustré sur la figure 2, et
- la figure 8 est une vue en coupe axiale d'un récipient selon un second mode de réalisation de l'invention.

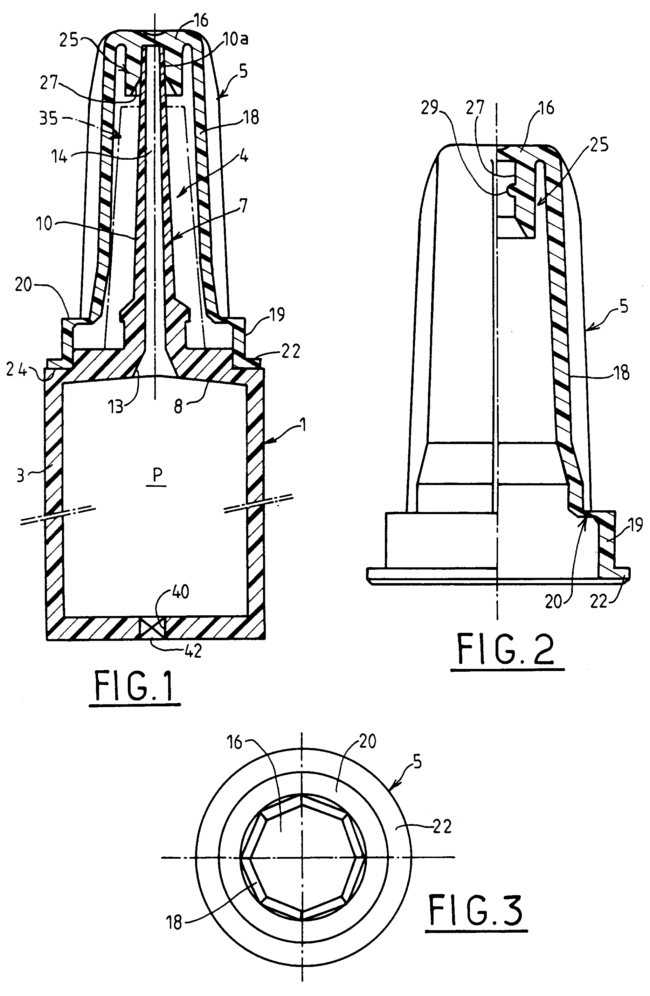

Le récipient 1 tel qu'illustré sur la figure 1 selon un premier mode de réalisation, comprend un corps creux 3 destiné à contenir un produit P, un système de délivrance 4 du produit P et un capuchon 5 rapporté autour du système de délivrance 4.

Le système de délivrance 4 est par exemple constitué par une canule 7 comportant une embase annulaire 8 prolongée axialement par un élément tubulaire 10. Dans l'exemple illustré sur la figure 1, l'embase 8 de la canule 7 est intégrée au corps 3 du récipient par surmoulage par exemple, et l'ouverture centrale de l'embase 8 forme un orifice de sortie 13 du récipient 1. Cet orifice 13 communique avec le conduit de passage 14 délimité par l'élément tubulaire 10 qui est ouvert à son extrémité libre. Concrètement, le corps 3 du récipient et le système de délivrance 4 forment une seule pièce, ce qui permet ainsi de supprimer avantageusement tout moyen de raccordement, par exemple par vissage, de l'embase 8 du système de délivrance 4 autour de l'orifice de sortie 13 du récipient.

En se reportant à la figure 2, le capuchon 5 comprend au moins deux parties axialement alignées et respectivement constituées par une paroi de fond 16 bordée par une jupe 18, et une embase annulaire 19 de plus grand diamètre que la jupe et qui est raccordée à cette dernière par une zone de fragilisation 20 de forme annulaire.

D'une manière générale, le capuchon 5 est destiné à coiffer le système de délivrance 4, de telle manière que l'élément tubulaire 10 du système de délivrance 4 vienne se loger à l'intérieur de la jupe 18 du capuchon 5, et que l'embase 8 du système de délivrance 4 vienne se loger dans l'embase 19 du capuchon 5. A cet effet, la jupe 18 du capuchon 5 s'étend sur une hauteur supérieure à celle de l'élément tubulaire 10 du système de délivrance 4, et présente un diamètre intérieur qui est supérieur au diamètre extérieur de l'élément tubulaire 10, alors que le diamètre intérieur de l'embase annulaire 19 du capuchon 5 est supérieur au diamètre extérieur de l'embase 8 du système de délivrance 4.

L'extrémité libre de l'embase 19 du capuchon 5 est destinée à être fixée de façon parfaitement étanche et hermétique sur le corps 3 du récipient. A cet effet, l'extrémité libre de l'embase 19 du capuchon 5 comporte par exemple un rebord radialement externe 22 destiné à venir en appui sur un épaulement 24 ménagé sur la surface externe du corps 3 du récipient (figure 1). La solidarisation entre le rebord 22 de la jupe 18 et l'épaulement 24 du corps 3 du récipient est assuré soit par collage, soit par scellage pour rendre l'ensemble parfaitement étanche. Dans le cas d'un scellage, on utilise les techniques de scellage connues à chaud, aux ultra-sons, à hautes fréquences ou par induction. De préférence, on utilisera la technique de scellage aux ultra-sons.

La face interne de la paroi de fond 16 du capuchon 5 comporte un bossage central 25 qui est destiné à coopérer de manière étanche avec la partie d'extrémité libre 10a de l'élément tubulaire 10. Plus précisément, ce bossage 25 est percé d'un orifice borgne 27 dont le diamètre intérieur est légèrement supérieur au diamètre extérieur de la partie d'extrémité libre 10a de l'élément tubulaire 10.

Avantageusement, la paroi interne de l'orifice borgne 27 peut comporter une nervure circulaire 29 en saillie pour constituer un renflement qui est destiné à parfaire l'assemblage et l'étanchéité entre le capuchon 5 et le système de délivrance 4 (figure 2). En outre, pour faciliter cet assemblage, l'entrée de l'orifice borgne 27 est évasée.

La zone de fragilisation 20 du capuchon 5 forme une membrane qui a une épaisseur nettement inférieure à celle de la jupe 18 et de l'embase annulaire 19 pour permettre sa rupture sans qu'il soit nécessaire de recourir à un outil pour entraîner en rotation le capuchon 5.

Le capuchon 5 est de préférence fabriqué par extrusion moulage d'une matière thermoplastique, et les épaisseurs de sa jupe 18 et de son embase 19 sont calculées pour lui conférer une rigidité suffisante afin d'éviter toute déformation lors des manipulations. La matière plastique utilisée pour fabriquer le capuchon 5 est généralement la même que celle du corps 3 du récipient ou du système d'assemblage 4.

La figure 1 montre le récipient 1 après sa fabrication et avant sa première utilisation. Le capuchon 5 qui est fixé de manière étanche sur le corps 3 du récipient permet de rendre l'ensemble parfaitement hermétique et inviolable avec protection du système de délivrance 4 qui est coiffé par le capuchon 5.

Pour la première utilisation du récipient 1, on imprime un mouvement de rotation au capuchon 5 par rapport au corps 3 du récipient, de manière à provoquer la rupture de la zone de fragilisation 20 et la séparation du capuchon 5, l'embase 19 restant solidaire du corps 3 du récipient. La canule 7 est alors utilisée pour délivrer le produit P contenu dans le corps 3 du récipient selon un processus qui est fonction de l'utilisation envisagée. A la fin de cette utilisation, le capuchon 5 peut être rapporté pour coiffer le système de délivrance 4, de manière à emboîter la partie d'extrémité libre 10a de l'élément tubulaire 10 dans l'orifice 27 du capuchon 5. Cet assemblage se fait d'une manière à obtenir un emboîtement serré qui permet de retenir le capuchon 5 sur le système d'assemblage et d'obturer de façon étanche l'extrémité libre de l'élément tubulaire 10 pour éviter au produit P d'être pollué ou de se répandre à l'extérieur.

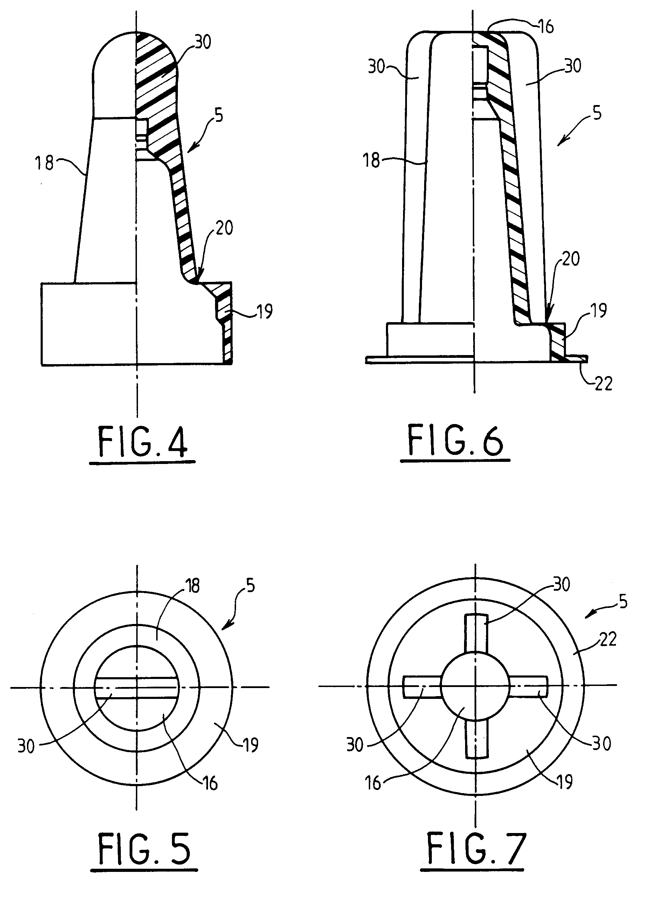

En se reportant à la figure 3, la jupe 18 du capuchon 5 a par exemple une forme polygonale, en particulier orthogonale, pour faciliter la préhension du capuchon 5 lors de l'opération de rotation pour la première utilisation du récipient 1. Sur la figure 4, on peut noter que l'embase 19 du capuchon 5 ne comporte pas de rebord 22 à son extrémité libre. Dans ce cas, l'embase annulaire 19 du capuchon 5 vient s'emboîter sur le corps 3 du récipient et est fixée à celui-ci par collage, par exemple, de manière à obtenir une étanchéité parfaite.

En se reportant aux figures 4 et 5, la jupe 18 du capuchon 5 a une forme conique et est surmontée d'une ailette 30 pour faciliter l'opération de préhension du capuchon 5 lors de la première utilisation du récipient 1.

En variante, en se reportant aux figures 6 et 7, la jupe 18 du capuchon 5 a une forme conique et comporte quatre ailettes 30 disposées suivant des génératrices du cône.

Enfin, le corps 3 du récipient, le système de délivrance 4 et/ou le capuchon 5 peuvent être colorés dans la masse par incorporation de pigments compatibles avec la ou les matières plastiques utilisées, l'utilisation envisagée et le produit contenu dans le récipient. Bien entendu, le corps 3 du récipient comporte un orifice de remplissage 40 qui est obturé par un bouchon 42 (figure 1).

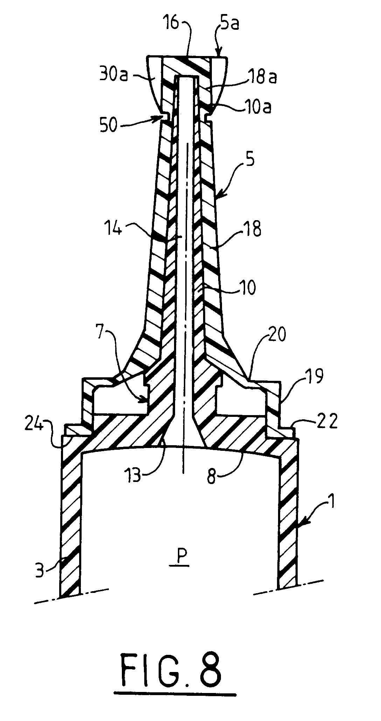

Dans un second mode de réalisation tel qu'illustré sur la figure 8, on a conservé les mêmes chiffres de référence pour les éléments qui sont communs avec ceux du premier mode de réalisation illustré sur la figure 1.

Selon cette figure 8, les moyens de formes complémentaires entre le système de délivrance 4, telle qu'une canule 7, et le capuchon 5 sont constitués par la partie d'extrémité libre 10a de la canule 7 et par la partie de fond 5a du capuchon 5 qui est opposée à son embase 19 rendue solidaire du corps du récipient 3.

La partie de fond 5a du capuchon 5 comprend une paroi de fond 16 bordée par une jupe 18a dont le diamètre intérieur est à peine supérieur au diamètre extérieur de la partie d'extrémité libre 10a de la canule 7, de manière à obtenir un assemblage par emboîtement serré entre les deux parties 5a et 10a. La jupe 18a se raccorde à la jupe 18 formant le corps du capuchon 5 par une seconde zone de fragilisation 50 de forme annulaire.

Ainsi, le capuchon 5 comporte globalement trois parties respectivement constituées par la partie de fond 5a, la jupe 18 ou corps du capuchon et l'embase 19, ces trois parties ne formant avantageusement qu'une seule et même pièce venue de moulage.

Ainsi, lors de la première utilisation du récipient, il est possible de ne rompre par rotation que la seconde zone de fragilisation 50 entre les deux jupes 18 et 18a du capuchon 5, pour découvrir uniquement la partie d'extrémité libre 10a de la canule 7. La partie de fond 5a du capuchon 5 forme en quelque sorte un second capuchon détachable qui peut être rapporté sur l'extrémité libre 10a de la canule 7 à la fin de la première utilisation du récipient.

Avantageusement, la jupe 18 qui forme le corps du capuchon 5 peut constituer un embout atraumatique autour de la canule 7 lorsque seule la seconde zone de fragilisation 50 est rompue.

Ensuite, en fonction de l'utilisation du récipient, il est possible de rompre également la première zone de fragilisation 20 entre la jupe 18 et l'embase 19 du capuchon 5 pour découvrir la canule 7 sur sensiblement toute sa hauteur.

On peut avantageusement prévoir des moyens de préhension 30a autour de la jupe 18a de la partie de fond 5a du capuchon 5 pour faciliter la rupture par rotation de cette partie 5a. Ces moyens de préhension 30a sont par exemple constitués par des ailettes.

D'une manière générale, l'assemblage entre la partie d'extrémité libre 10a de la canule 7 et de la partie d'extrémité libre 5a du capuchon 5 peut être modifié conformément à la figure 2 pour parfaire l'étanchéité entre ces deux parties. Enfin, le récipient 1 illustré partiellement sur la figure 8 peut être du même type que celui illustré sur la figure 1 qui est un corps creux muni d'une ouverture de remplissage, mais il peut constituer également le corps d'une seringue, par exemple.

Dans le cas où le système de délivrance est une canule, celle-ci peut être équipée d'un embout atraumatique 35 qui entoure l'élément tubulaire 10 sauf dans la partie d'extrémité libre 10a de ce dernier.

## Revendications

1. Récipient manipulable en matière plastique, comprenant un capuchon amovible (5) de fermeture d'un orifice (13) du récipient et des moyens de liaison (20) entre le capuchon (5) et le corps (3) du récipient qui sont destinés à être rompus par rotation pour la première utilisation du récipient, un système de délivrance (4) d'un produit (P) contenu dans le récipient, ce système (4) étant monté autour de l'orifice (13) du récipient, solidaire de ce dernier et coiffé par le capuchon (5) qui comprend au moins deux parties axialement alignées et reliées l'une à l'autre par lesdits moyens de liaison (20) constitués par une zone de fragilisation qui sépare le capuchon (5) en deux parties dont l'une reste en contact avec le corps (3) du récipient (5) après rupture de la zone de fragilisation, caractérisé en ce que la partie du capuchon qui reste en contact avec le corps (3) du récipient (5) est rendue solidaire du corps (3) par des moyens de fixation étanches et hermétiques.

2. Récipient selon la revendication 1, caractérisé en ce que le capuchon (5) et le système de délivrance (4) comprennent des moyens de formes complémentaires (27, 10a) pour pouvoir s'emboîter l'un dans l'autre de manière amovible et étanche après la première utilisation du récipient.

3. Récipient selon la revendication 2, caractérisé en ce que la première partie du capuchon (5) est constituée par une paroi de fond (16) bordée par une jupe (18), et en ce que la seconde partie du capuchon (5) est constituée par une embase annulaire (19) de plus grand diamètre que celui de la jupe (18) et raccordée à celle-ci par ladite zone de fragilisation (20) qui est de forme annulaire.

4. Récipient selon la revendication 3, caractérisé en ce que l'embase (19) du capuchon (5) est fixée de manière étanche et hermétique par scellage sur le corps (3) du récipient.

5. Récipient selon la revendication 3, caractérisé en ce que l'embase (19) du capuchon (5) est fixée de manière étanche par collage sur le corps (3) du récipient.

6. Récipient selon l'une quelconque des revendications 3 à 5, caractérisé en ce que le système de délivrance (4) comprend un élément tubulaire (10) en communication avec l'orifice (13) du récipient, et en ce que les moyens de formes complémentaires pour permettre l'emboîtement du capuchon (5) et du système de délivrance (4) sont constitués par la partie d'extrémité libre (10a) de l'élément tubulaire (10) et par un bossage central (25) prévu sur la face interne de la paroi de fond (16) du capuchon (5), ce bossage (25) étant percé d'un orifice borgne (27) dont le diamètre est à peine supérieur à celui de la partie d'extrémité libre (10a) de l'élément tubulaire (10).

7. Récipient selon la revendication 6, caractérisé en ce que la paroi interne de l'orifice (27) du bossage (25) comporte une nervure circulaire (29) pour parfaire l'étanchéité entre le capuchon (5) et le système de délivrance (4).

8. Récipient selon la revendication 1, caractérisé en ce que lesdits moyens de formes complémentaires sont constitués par la partie d'extrémité libre (10a) du système de délivrance (4) et par la partie de fond (5a), du capuchon (5), et en ce que la partie de fond (5a) est raccordée au corps du capuchon (5) par une seconde zone de fragilisation (50) destinée à être rompue pour ne découvrir uniquement que la partie d'extrémité libre (10a) du système de délivrance (4).

9. Récipient selon la revendication 8, caractérisé en ce que le capuchon (5) comprend au moins trois parties axialement alignées qui sont respectivement constituées par :
- la partie de fond (5a) comprenant une paroi de fond (16) bordée par une jupe (18a),
- une partie centrale comprenant un jupe (18) reliée à la jupe (18a) par la seconde zone de fragilisation (50), et
- une embase annulaire (19) rendue solidaire du corps (3) du récipient et raccordée à la jupe (18) par lesdits moyens de liaison (20) formés par une première zone de fragilisation.

10. Récipient selon la revendication 9, caractérisé en ce que la jupe (18) du capuchon (5) forme un embout atraumatique.

11. Récipient selon la revendication 9, caractérisé en ce que les trois parties constitutives du capuchon (5) ne forment qu'une seule pièce venue de moulage.

12. Perfectionnement selon la revendication 9, caractérisé en ce que la jupe (18a) de la partie de fond (5a) est entourée par des ailettes (30a) pour faciliter la rupture par rotation de la seconde zone de fragilisation (50).

13. Récipient selon l'une quelconque des revendications précédentes, caractérisé en ce que le capuchon est fabriqué en matière plastique par extrusion moulage d'une matière thermoplastique macromoléculaire à base de polymères ou copolymères insolubles ou biodégradables.

14. Récipient selon la revendication 13, caractérisé en ce que la matière thermoplastique est un polyéthylène à basse densité ou un polyéthylène linéaire à basse densité.

15. Récipient selon la revendication 13 ou 14, caractérisé en ce que le corps (3) du récipient et le capuchon (5) sont fabriqués à partir de la même matière plastique.

16. Récipient selon l'une quelconque des revendications précédentes, caractérisé en ce qu'il est constitué par une seringue, un tube ou un flacon en matière plastique.

## Claims

1. A hand-held receptacle of plastics material comprising a removable cap (5) for closing an orifice (13) of the receptacle, link means (20) between the cap (5) and the body (3) of the receptacle designed to be broken by rotation for further use of the receptacle, and a delivery system (4) for delivering substance (P) contained in the receptacle, the system (4) being mounted around the orifice (13) of the receptacle, being secured thereto, and being covered by the cap (5) which comprises at least two axially aligned portions that are connected to each other by said link means (20) which are constituted by a zone of weakness which separates the cap (5) into two portions, one of which remains in contact with the body (3) of the receptacle after the zone of weakness has been broken, the receptacle being characterized in that the portion of the cap which remains in contact with the body (3) of the receptacle is secured to the body (3) by sealed and hermetic fixing means.

2. A receptacle according to claim 1, characterized in that the cap (5) and the delivery system (4) include complementary shape means (27, 10a) capable of releasable mutual engagement one within the other in sealed manner after first use of the receptacle.

3. A receptacle according to claim 2, characterized in that the first portion of the cap (5) is constituted by an end wall (16) bordered by a skirt (18), and in that the second portion of the cap (5) is constituted by an annular base (19) of greater diameter than that of the skirt (18) and connected thereto by said zone of weakness (20) which is annular in shape.

4. A receptacle according to claim 3, characterized in that the base (19) of the cap (5) is fixed in sealed manner to the body (3) of the receptacle by heat sealing.

5. A receptacle according to claim 3, characterized in that the base (19) of the cap (5) is fixed in sealed manner to the body (3) of the receptacle by adhesive.

6. A receptacle according to any one of claims 3 to 5, characterized in that the delivery system (4) comprises a tubular element (10) in communication with the orifice (13) of the receptacle, and in that the complementary shape means enabling the cap (5) and the delivery system (4) to be mutually engaged are constituted by the free end portion (10a) of the tubular element (10) and by a central projection (25) provided on the inside face of the end wall (16) of the cap (5), said projection (25) being pierced by a blind orifice (27) whose diameter is very little greater than the diameter of the free end portion (10a) of the tubular element (10).

7. A receptacle according to claim 6, characterized in that the inside wall of the orifice (27) of the projection (25) includes a circular rib (29) to improve sealing between the cap (5) and the delivery system (4).

8. A receptacle according to claim 1, characterized in that said complementary shape means are constituted by the free end portion (10a) of the delivery system (4) and by the end wall portion (5a) of the cap (5), and in that the end wall portion (5a) is connected to the body of the cap (5) by a second zone of weakness (50) designed to be broken so as to uncover only the free end portion (10a) of the delivery system (4).

9. A receptacle according to claim 8, characterized in that the cap (5) comprises at least three axially aligned portions respectively constituted by:
• the end wall portion (5a) comprising the end wall (16) bordered by a skirt (18a);
• a central portion comprising a skirt (18) connected to the skirt (18a) of the end all portion via the second zone of weakness (50); and
• an annular base (19) secured to the body (3) of the receptacle and connected to the skirt (18) of the central portion by said link means (20) forming a first zone of weakness.

10. A receptacle according to claim 9, characterized in that the skirt (18) of the cap (5) constitutes a atraumatic endpiece.

11. A receptacle according to claim 9, characterized in that the three portions constituting the cap (5) comprise a single piece obtained by molding.

12. An improvement according to claim 9, characterized in that the skirt (18a) of the end wall portion (5a) is surrounded by fins (30a) to facilitate breaking the second zone of weakness (50) by rotation.

13. A receptacle according to any preceding claim, characterized in that the cap is made of plastics material by extrusion molding a macromolecular thermoplastic material based on insoluble or biodegradable polymers or copolymers.

14. A receptacle according to claim 13, characterized in that the thermoplastic material is low density polyethylene or low density linear polyethylene.

15. A receptacle according to claim 13 or 14, characterized in that the bodies (3) of the receptacle and of the cap (5) are made out of the same plastics material.

16. A receptacle according to any preceding claim, characterized in that it is constituted by a plastics material syringe, tube, or flask.

## Patentansprüche

1. Manipulierbarer Behälter aus Kunststoff, der folgendes umfaßt: Eine abnehmbare Verschlußkappe (5) für eine Öffnung (13) des Behälters und Verbindungsmittel (20) zwischen der Kappe (5) und dem Körper (3) des Behälters, die für eine erste Benutzung durch Drehung der Kappe getrennt werden, eine Austrittsvorrichtung (4) für eine im Behälter enthaltene Lösung (P), wobei diese Vorrichtung (4) um die Öffnung (13) des Behälters montiert und mit Letzterem verbunden ist und von der Kappe (5) bedeckt wird, wobei die Kappe mindestens zwei der Achse nach angeordnete Teile aufweist, welche aneinander durch die genannten Verbindungsmittel (20) gehalten werden, wobei die Verbindungsmittel aus einer brüchigen Zone bestehen, welche die Kappe (5) in zwei Teilen trennt, wobei ein Teil nach Trennung der brüchigen Zone am Körper des Behälters (3) fest bleibt,
dadurch gekennzeichnet,
daß der Teil der Kappe, der an, Körper (3) des Behälters fest bleibt, durch hermetische und wasserundurchlässige Verbindungsmittel am Körper (3) gehalten wird.

2. Behälter nach Anspruch 1,
dadurch gekennzeichnet,
daß die Kappe (5) und die Austrittsvorrichtung (4), um aufeinander gesteckt zu werden, einander sich ergänzende Mittel (27, 10a) umfassen, wobei die Verbindung nach der ersten Benutzung wasserdicht und trennbar bleibt.

3. Behälter nach Anspruch 2,
dadurch gekennzeichnet,
daß der erste Teil der Kappe (5) aus einer von einem Mantel (18) umschlossenen Bodenwand (16) besteht, und daß der zweite Teil der Kappe (5) aus einem ringförmigen Sockel (19) besteht, dessen Durchmesser größer ist als der des Mantels (18), an dem der Mantel über die ebenfalls ringförmige brüchige Zone (20) verbunden ist.

4. Behälter nach Anspruch 3.
dadurch gekennzeichnet,
daß der Sockel (19) der Kappe (5) durch Versiegelung hermetisch und wasserdicht am Körper (3) des Behälters befestigt ist.

5. Behälter nach Anspruch 3,
dadurch gekennzeichnet,
daß der Sockel (19) der Kappe (5) durch Verkitten wasserdicht an, Körper (3) des Behälters befestigt ist.

6. Behälter nach einem der Ansprüche 3 bis 5,
dadurch gekennzeichnet,
daß die Austrittsvorrichtung (4) ein rohrförmiges, mit der Öffnung (13) des Behälters kommunizierendes Element (10) umfaßt, und daß die sich ergänzenden Mittel zum Aufstecken der Kappe (5) auf die Austrittsvorrichtung (4) aus dein freien Endstück (10a) des rohrförmigen Elements (10) und aus einer in der Mitte der Bodenwand (16) der Kappe (5) vorgesehenen Verbeulung bestehen, wobei diese Verbeulung (25) eine blinde Öffnung (27) aufweist, deren Durchmesser kaum größer ist als der des freien Endstücks (10a) des rohrförmigen Elements (10).

7. Behälter nach Anspruch 6,
dadurch gekennzeichnet,
daß die innere Wand der Öffnung (27) in der Verbeulung (25) eine ringförmige Rippe (29) aufweist, um die Verdichtung zwischen Kappe (5) und Austrittsvorrichtung (4) zu optimieren.

8. Behälter nach Anspruch 1,
dadurch gekennzeichnet,
daß die genannten sich in der Form ergänzenden Mittel aus dem freien Endstück (10a) der Austrittsvorrichtung (4) und aus dem Bodenstück (5a) der Kappe (5) bestehen, und daß das Bodenstück (5a) am Körper der Kappe (5) durch eine zweite brüchige Zone (50) befestigt ist, welche gelöst werden kann, um nur das freie Endstück (10a) der Austrittsvorrichtung (4) freizulegen.

9. Behälter nach Anspruch 8,
dadurch gekennzeichnet,
daß die Kappe (5) mindestens drei der Achse nach angeordnete Teile umfaßt, nacheinander:
- das Bodenstück (5a), das eine von einem Mantel (18a) umschlossene Bodenwand (16) umfaßt,
- ein mittlerer Teil, der einen am Mantel (18a) durch die zweite brüchige Zone (50) verknüpften Mantel (18) umfaßt, und
- ein ringförmiger Sockel (19), der am Körper (3) des Behälters gebunden und mit dem Mantel (18) durch die aus einer ersten brüchigen Zone bestehenden Mitteln verknüpft ist.

10. Behälter nach Anspruch 9,
dadurch gekennzeichnet,
daß der Mantel (18) der Kappe (5) ein atraumatisches Endstück bildet.

11. Behälter nach Anspruch 9,
dadurch gekennzeichnet,
daß die drei die Kappe (5) bildenden Teile ein einziges gegossenes Stück bilden.

12. Weitere Ausgestaltung nach Anspruch 9,
dadurch gekennzeichnet,
daß der Mantel (18a) des Bodenstücks (5a) von Flügeln (30a) umgeben ist, um das Trennen der zweiten brüchigen Zone (50) durch Drehung zu vereinfachen.

13. Behälter nach einem der vorangehenden Ansprüche
dadurch gekennzeichnet,
daß die Kappe aus Kunststoff, durch Extrudieren eines aus unlöslichen oder biologisch abbaubaren Polymer- oder Kopolymerverbindungen bestehenden thermoplastischen Makromolekularstoffes, hergestellt wurde.

14. Behälter nach Anspruch 13,
dadurch gekennzeichnet, daß der thermoplastische Stoff ein Polyethylen niedriger Dichte oder ein lineares Polyethylen niedriger Dichte ist.

15. Behälter nach Anspruch 13 oder 14,
dadurch gekennzeichnet,
daß der Körper (3) des Behälters und die Kappe (5) aus dem gleichen Kunststoff hergestellt wurden.

16. Behälter nach einem der vorangehenden Ansprüche,
dadurch gekennzeichnet,
daß er aus einer Spritze, einer Tube oder einem Fläschchen aus Kunststoff besteht.
